# EUROPÄISCHE PATENTSCHRIFT

(11) **EP 3 211 205 B1**
(45) Veröffentlichungstag und Bekanntmachung des Hinweises auf die Patenterteilung: **11.12.2024**
(21) Anmeldenummer: 17153776.4
(22) Anmeldetag: 30.01.2017
(51) Int. Cl.: F02M 37/24, B01D 24/00, B01D 35/30, B01D 36/00, B01D 27/02, B01D 17/02

(54) **KRAFTSTOFFFILTERSYSTEM**
FUEL FILTER SYSTEM
SYSTÈME DE FILTRATION DE CARBURANT

(30) Priorität: 25.02.2016 DE 102016002264
(43) Veröffentlichungstag der Anmeldung: 30.08.2017
(73) Patentinhaber: MANN+HUMMEL GmbH, 71636 Ludwigsburg (DE)
(72) Erfinder: SPELTER, Dr. Lars, 71254 Ditzingen (DE); RAZGANI, Idriss, 90060 Tanger (MA); BAUMANN, Christoph, 49006 Kalamazoo, MI (US)
(74) Vertreter: Mann + Hummel Intellectual Property

(56) Entgegenhaltungen:
- EP-A1- 2 957 683
- WO-A1-2007/031766
- DE-A1- 102004 036 070
- DE-A1- 2 934 246
- US-A- 2 027 400
- US-A- 4 515 690

## Beschreibung

### Technisches Gebiet

Die Erfindung betrifft ein Kraftstofffiltersystem mit einem Reinigungsmodul zur Reinigung eines mit einem zweiten Medium verunreinigten Medienstroms eines ersten Mediums sowie ein Filterelement für ein Reinigungsmodul und ein Filtersystem.

### Stand der Technik

Im Kraftstoffsystem eines Verbrennungsmotors, insbesondere eines Kraftfahrzeugs kann sich beispielsweise durch Kondenswasserbildung Wasser ansammeln. Für einen zuverlässigen Motorlauf ist eine Abscheidung des Wasseranteils im Kraftstoff erforderlich. Bekannte Kraftstoffsysteme weisen dazu einen Wasserabscheider auf, in dem beispielsweise mit einem Koaleszer oder einem hydrophoben Filtermedium ein Wasseranteil vom Kraftstoff getrennt wird.

Die Abscheidung des Wasseranteils mit bekannten Vorrichtungen führt dazu, dass das abgeschiedene Wasser nicht rein ist, sondern Kraftstoffanteile enthält. Die Entsorgung der mit einem Kraftstoffanteil verunreinigten abgeschiedenen Wassermenge ist insbesondere im Hinblick auf den erforderlichen Umweltschutz problematisch.

Aus der DE 10 2004 036 070 A1 ist ein Wasserabscheider eines Kraftstoffsystems für einen Verbrennungsmotor bekannt, bei dem stromab seines Wasserauslasses ein Adsorptionsfilter zur adsorbierenden Aufnahme eines Kraftstoffanteiles im abgeschiedenen Wasser angeordnet ist. Ein Filterelement des Adsorptionsfilters bewirkt eine Adsorption des Kraftstoffanteiles mit einem Retentionsverhalten, wobei sich der Kraftstoffanteil der zugeführten abgeschiedenen Wassermenge an dem Filtermaterial anlagert und dort gehalten wird. Die durch den Adsorptionsfilter geleitete Wassermenge weist stromab des Filters einen hohen Reinigungsgrad auf. Das Adsorptionsmaterial des Filterelementes ist beispielsweise Aktivkohle oder ein quellfähiger, absorptionsfähiger Kunststoff wie Polypropylen, Polyethylen oder PVC. Das Adsorptionsmaterial ist als lose, granulatartige Schüttung, als Sinterkörper oder als Schaum zur Bildung des Filterelementes ausgeführt.

### Offenbarung der Erfindung

Eine Aufgabe der Erfindung ist es, ein Kraftstofffiltersystem mit einem Reinigungsmodul zur Reinigung eines mit einem zweiten Medium verunreinigten Medienstroms eines ersten Mediums zu schaffen, welches wartungsfreundlich gestaltet ist.

Die vorgenannte Aufgabe wird nach einem Aspekt der Erfindung bei einem Kraftstofffiltersystem gelöst, indem das Kraftstofffiltersystem ein Reinigungsmodul aufweist, dass ein Gehäuse mit einem Einlass und einem Auslass und ein in dem Gehäuse angeordnetes austauschbares Filterelement umfasst, wobei das Filterelement ein ab- und/oder adsorptionsfähiges Material zur Aufnahme wenigstens eines Anteils des zweiten Mediums in dem ersten Medium aufweist.

Günstige Ausgestaltungen und Vorteile der Erfindung ergeben sich aus den weiteren Ansprüchen, der Beschreibung und der Zeichnung.

Es wird ein Kraftstofffiltersystem mit einem Reinigungsmodul zur Reinigung eines mit einem zweiten Medium verunreinigten Medienstroms eines ersten Mediums vorgeschlagen, welches ein Gehäuse mit einem Einlass und einem Auslass und ein in dem Gehäuse angeordnetes austauschbares Filterelement umfasst. Dabei ist eine Strömungsrichtung des Medienstroms durch das Filterelement im bestimmungsgemäß eingebauten Zustand entgegen der Schwerkraft gerichtet. Das Filterelement weist ein ab-und oder adsorptionsfähiges Material zur Aufnahme wenigstens eines Anteils des zweiten Mediums in dem ersten Medium auf.

Das Reinigungsmodul kommt in einem Kraftstoffversorgungssystem eines Kraftfahrzeugs zum Einsatz, bei dem das erste Medium abgeschiedenes Wasser darstellt, das mit dem Kraftstoff als zweitem Medium verunreinigt ist.

Das Wasser fällt an, wenn Kraftstoff, vorzugsweise Dieselkraftstoff, mittels eines Diesel-Wasser-Abscheiders gereinigt und in diesem Zuge das Wasser separiert wird. Das Wasser wird üblicherweise in einem Sammelraum aufgefangen, der direkt im Filtergehäuse angeordnet sein kann. Das Wasser kann auch in einem gesonderten Behältnis oder einem transparenten Bowl aufgefangen werden. Das Wasser wird dann aus dem Filtersystem abgelassen. Wenn das Wasser in die Umgebung abgelassen werden soll, wird es vor dem Kontakt mit der Umgebung von verbleibenden Kohlenwasserstoffen gereinigt. Hierzu dient üblicherweise Aktivkohle.

Wenn zur Reinigung des aus Kraftstoffversorgungssystemen von Kraftfahrzeugen oder Stationärmotoren stammenden Wassers Aktivkohle eingesetzt werden soll, so hängt die Lebensdauer des Adsorbens Aktivkohle von der Wassermenge sowie der Konzentration an Kohlenwasserstoffen in diesem ab. Je höher der Anteil der Kohlenwasserstoffe oder je höher die Wassermenge, desto eher ist das Adsorbens erschöpft und muss ausgetauscht werden. Die Kohlenwasserstoffe, insbesondere Diesel, können sich zum Teil im Wasser lösen oder auch als Emulsion vorliegen. Die im Feld beobachtete Löslichkeit bewegt sich zwischen 3 und 6 mg Kohlenwasserstoffen gem. DIN EN ISO 9377-2 H 53. Meistens liegt jedoch eine Diesel-in-Wasser Emulsion vor, d. h. feinste Dieseltropfen sind in dem Wasser dispergiert. Diese Emulsionen sind meist sehr stabil, sodass sie sich nicht in der zur Verfügung stehenden Zeit bis zum Ablassen des Wassers in zwei Phasen auftrennen. Die Konzentration an Kohlenwasserstoffen kann bei diesen Emulsionen zwischen 500 mg/l bis über 2000 mg/l Wasser gem. DIN EN ISO 9377-2 H 53 betragen.

Soll nun Aktivkohle für die Adsorption eingesetzt werden, so ist es unmöglich für jedes Fahrzeug in jeder Region weltweit vorherzusagen, wieviel Wasser mit welcher Konzentration an Kohlenwasserstoffen anfallen wird. Die Unterschiede sind regional (verschiedene Märkte mit unterschiedlichen Kraftstoffqualitäten) und lokal (verschiedene Betreiber von Tankstellen) zu groß, als dass mit einer festen Menge an Aktivkohle eine einheitliche Standzeit z. B. in Form eines Lebensdauerbauteils erreicht werden kann. Die benötigte Menge an Aktivkohle wäre nicht praktikabel, denn der Bauraum ist in den modernen Fahrzeugen sehr begrenzt. Für ein Lebensdauerbauteil könnten mehrere Liter Aktivkohle notwendig sein, wenn der Kraftstoff relativ viel Wasser enthält und davon ausgegangen wird, dass nahezu ausschließlich eine Diesel-in-Wasser Emulsion vorliegt. Letzteres kann auf Basis der langjährigen Erfahrung mit Diesel-Wasser-Abscheidern in der Branche als gegeben angesehen werden.

Vorzugsweise kann Aktivkohle in einem Filterelement eines Reinigungsmoduls, beispielsweise in Form einer Kartusche, angeordnet sein, die vorzugsweise ohne Werkzeug aus dem Gehäuse entfernt und ausgetauscht werden kann, z. B. über einen Schnellverschluss. Die Form der Kartusche ist für die optimale Ausnutzung des Volumens optimiert.

Durch die Ausführung als Service-Teil anstatt eines Ersatzteils wird es für den Betreiber einfacher, die Aktivkohle zu tauschen. Weiterhin kann die Menge der Aktivkohle im Vergleich zur Ausführung als Lebensdauerbauteil erheblich reduziert werden. Hierdurch wird Bauraum eingespart. Weiterhin kann das Wechselintervall auf Basis regionaler und lokaler Unterschiede bzgl. des Anfalls an abgeschiedenem Wasser flexibel angepasst werden. Die Beladung der Aktivkohle mit Kohlenwasserstoffen kann mittels der Detektion der Ablassvorgänge im Fahrzeug überwacht werden. Ist eine entsprechende Anzahl von Wasserablassvorgängen überschritten, kann beispielsweise eine Meldung im Fehlerspeicher des Fahrzeugs abgelegt werden. Beim nächsten regulären Service kann die Aktivkohlekartusche dann gewechselt werden. Eine entsprechende Reserve ist hierfür einzuberechnen. Nutzt der Betreiber des Motors wasserfreien Kraftstoff, so wird die Aktivkohle nicht beladen und muss nicht ausgetauscht werden. Für den Betreiber entstehen daher keine zusätzlichen Kosten im Vergleich zu einem Lebensdauerbauteil.

Ein Verhältnis von Länge zu Durchmesser des Filterelements des Reinigungsmoduls kann beispielsweise zwischen 1:1 und 15:1 liegen, vorzugsweise kann das Verhältnis zwischen 2:1 und 6:1 liegen. Auf diese Weise lässt sich eine günstige Durchströmung des ab- und/oder adsorptionsfähigen Materials sowie eine vorteilhafte Ausnutzung der Kapazität des ab- und/oder adsorptionsfähigen Materials erreichen.

Günstigerweise kann der Auslass im bestimmungsgemäß eingebauten Zustand oberhalb des Einlasses oder des Eintritts in das Ab- und/oder Adsorbens bzw. den Abscheider des Filterelements angeordnet sein. Das Wasser kann so vorteilhaft das Filtermedium in Form des ab- und/oder adsorptionsfähigen Materials von unten nach oben durchströmen, wobei der Druck des Wassers gerade ausreichen kann, um über den Auslass im oberen Bereich des Filterelements wieder aus dem Reinigungsmodul abfließen zu können. Das Wasser kann so in nahezu drucklosem Zustand das ab- und/oder adsorptionsfähige Material, beispielsweise Aktivkohle, durchströmen und so vorteilhaft gereinigt werden.

Erfindungsgemäß umfasst das Gehäuse ein erstes Gehäuseteil und ein zweites Gehäuseteil, wobei das erste und das zweite Gehäuseteil zu einer lösbaren mediendichten Verbindung miteinander ausgebildet sind. Dadurch kann das Filterelement im Inneren des Gehäuses angeordnet werden und nach Lösen der beiden Gehäuseteile voneinander aus dem Inneren entfernt werden, um eventuell ausgetauscht oder auch aufbereitet zu werden. Dadurch, dass beide Gehäuseteile mediendicht verbunden sind, ist gewährleistet, dass das zu reinigende Medium durch den Einlass einfließen und erst am Auslass wieder abfließen kann.

Erfindungsgemäß ist das Filterelement an dem zweiten Gehäuseteil angeordnet, insbesondere lösbar angeordnet. Das Filterelement ist so mit einem der beiden Gehäuseteile verbunden, um an dem Gehäuseteil hängend aus dem anderen der beiden Gehäuseteile entnommen zu werden, um nach Beladung mit dem zweiten Medium beispielsweise ausgetauscht oder aufbereitet zu werden. Dadurch ist auch gewährleistet, dass das Filterelement günstig gehandhabt werden kann, indem es mit dem Gehäuseteil aus dem anderen Gehäuseteil herausgezogen werden kann, ohne dass das Filterelement selbst angefasst werden muss. Die Dichtung zwischen den beiden Gehäuseteilen kann als einfache Dichtung ausgeführt werden, da der Medienstrom mit geringem Druck in dem Reinigungsmodul strömt. Das Filterelement kann mit dem ersten oder dem zweiten Gehäuseteil unlösbar verbunden sein. Jedoch ist insbesondere auch denkbar, dass das Filterelement lösbar verbunden ist.

Erfindungsgemäß ist der Einlass an dem ersten Gehäuseteil und der Auslass an dem zweiten Gehäuseteil angeordnet. Beispielsweise kann das erste Gehäuseteil das untere Gehäuseteil darstellen. Damit ist der Einlass am unteren Gehäuseteil angeordnet. Das zweite Gehäuseteil kann von oben auf das erste Gehäuseteil aufgesetzt oder geschraubt werden. Wenn so der Auslass an dem zweiten Gehäuseteil angeordnet ist, kann das zu reinigende Medium das Reinigungsmodul von unten nach oben durchströmen und über den Auslass am oberen Gehäuseteil abfließen. Dadurch kann das Filterelement, das im Inneren der beiden Gehäuseteile angeordnet ist, von unten nach oben durchströmt und gereinigt werden. Auch lässt sich das Filterelement zum Austausch günstig nach oben entnehmen, so dass bei der Entnahme möglichst wenig Leckage des ersten Mediums auftritt.

Gemäß einer vorteilhaften Ausgestaltung können der Einlass und der Auslass an dem ersten Gehäuseteil angeordnet sein. Auf diese Weise können sowohl Einlass und Auslass an dem ersten Gehäuseteil, welches das untere der beiden Gehäuseteile in dem Reinigungsmodul darstellen kann, angeordnet sein. Damit ist es möglich, dass Einlass und Auslass dauerhaft mit Anschlusskomponenten verbunden bleiben und zum Entnehmen des Filterelements lediglich das zweite Gehäuseteil als oberes Gehäuseteil abgenommen werden muss, um das Filterelement auszutauschen oder aufzubereiten. Auf diese Weise ist die Wartung des Reinigungsmoduls sehr vereinfacht möglich.

Gemäß einer vorteilhaften Ausgestaltung kann das adsorptionsfähige Material als lose, granulatartige Schüttung vorgesehen sein. Eine lose Schüttung aus einzelnen Körnern in Granulatform ist besonders vorteilhaft, um von einem zu reinigenden Medium durchflossen zu werden. Dabei bietet die lose, granulatartige Schüttung eine besonders leicht zu durchströmende Ausführungsform, um das aufzunehmende Medium günstig zu ab- und/oder adsorbieren. Damit ist sowohl eine sehr effektive Reinigung des ersten Mediums von dem zweiten Medium möglich. Außerdem ist so auch gewährleistet, dass die Aufnahmekapazität des ab- und/oder adsorptionsfähigen Materials möglichst günstig ausgeschöpft wird, was eine große Standzeit des Filterelements vorteilhaft ermöglicht.

Gemäß einer vorteilhaften Ausgestaltung kann das ab- und/oder adsorptionsfähige Material gesintert und/oder geschäumt vorgesehen sein. In alternativen Ausgestaltungen des ab- und/oder adsorptionsfähigen Materials kann dieses auch als Sinterkörper oder geschäumtes Filterelement ausgebildet sein. Auch dadurch ist es möglich, dass das ab-und/oder adsorptionsfähige Material eine möglichst große Oberfläche dem zu reinigenden Medium anbietet, damit die innere Oberfläche im Fall von Aktivkohle in hohem Maße zugänglich ist, um so eine effektive Reinigung mit einer möglichst großen Aufnahmekapazität des Filterelements zu verbinden, wodurch die Standzeit des Filterelements verlängert wird. So ergibt sich eine hohe Ab- bzw. Adsorptionsleistung bei geringem Durchströmungswiderstand.

Gemäß einer vorteilhaften Ausgestaltung kann das ab- und/oder adsorptionsfähige Material Aktivkohle aufweisen. Aktivkohle hat sich als sehr geeignetes Material beispielsweise zur Reinigung von verunreinigtem Wasser von Kraftstoff wie Dieselkraftstoff durch Adsorption des Kraftstoffs erwiesen. Die Korngröße der Aktivkohle kann bevorzugt im Mittel bei 0,5 mm liegen. Die Masse der Aktivkohle in dem Filterelement kann beispielsweise 50 g bis 400 g, bevorzugt 100 g bis 200 g, betragen,
Gemäß einer vorteilhaften Ausgestaltung kann das ab- und/oder adsorptionsfähige Material einen quellfähigen Kunststoff, insbesondere PE, PP oder PVC aufweisen, wobei auch ein Gemisch der genannten Materialien in Frage kommt. Ebenso lassen sich alternativ oder zusätzlich andere Materialien mit ähnlichen, vergleichbaren Eigenschaften einsetzen.

Gemäß einer vorteilhaften Ausgestaltung kann das ab- und/oder adsorptionsfähige Material eine Schüttung aus Kunststoffröhrchen aufweisen, insbesondere eine Schüttung aus Kunststoffröhrchen mit einem Vlies. Auch eine solche Schüttung aus Kunststoffröhrchen, insbesondere zusammen mit einem Vlies, bietet eine große Oberfläche, um möglichst effektiv beispielsweise mit Kraftstoff verunreinigtes Wasser zu reinigen und außerdem eine große Standzeit des Filterelements durch günstige Ausnutzung der Aufnahmekapazität des ab- und/oder adsorptionsfähigen Materials zu erreichen. Im Vergleich zu Aktivkohle ist die Aufnahmekapazität bezogen auf das Volumen des Materials niedriger, da die innere Oberfläche der Aktivkohle den anderen Materialien überlegen ist.

Gemäß einer vorteilhaften Ausgestaltung kann ein Indikator zur Anzeige einer Beladung des Filterelements mit dem zweiten Medium vorgesehen sein. Durch einen solchen Indikator ist es möglich, die Aufnahmekapazität des ab- und/oder adsorptionsfähigen Materials möglichst effektiv auszunutzen, um so das Filterelement tatsächlich erst auszutauschen oder aufzubereiten, wenn die Aufnahmekapazität wirklich erschöpft ist und so die Standzeit des Filterelements vollständig ausgenutzt ist. Auf diese Weise ist es möglich, Prinzipien der bedarfsgerechten Wartung eines Filtersystems vorteilhaft zu verwirklichen.

Nach einem weiteren Aspekt der Erfindung wird ein Filterelement vorgeschlagen, welches ein ab- und/oder adsorptionsfähiges Material zur Aufnahme eines Anteils eines zweiten Mediums in dem ersten Medium umfasst, wobei das Filterelement zur Aufnahme in einem Reinigungsmodul nach einem der vorhergehenden Ansprüche ausgebildet und vorgesehen ist. Das Filterelement kann das ab- und/oder adsorptionsfähige Material in einem geeigneten Behältnis beinhalten, das von dem zu reinigenden Medium günstig durchströmt werden kann, wie beispielsweise einen porösen Mantel oder ein Vlies, welche Anordnung besonders für eine Schüttung aus ab- und/oder adsorptionsfähigem Material vorteilhaft ist. Alternativ ist auch denkbar, dass das ab- und/oder adsorptionsfähige Material selbsttragend, beispielsweise als gesinterter oder gepresster Körper ausgebildet ist, so dass das ab- und/oder adsorptionsfähige Material direkt an einem Gehäuseteil angeordnet sein kann und mit diesem Gehäuseteil aus dem anderen Gehäuseteil entnommen oder in dieses eingesetzt werden kann.

Gemäß einer vorteilhaften Ausgestaltung kann das ab- und/oder adsorptionsfähige Material als lose, granulatartige Schüttung vorgesehen sein und/oder gesintert vorgesehen sein und/oder geschäumt vorgesehen sein.

Gemäß einer vorteilhaften Ausgestaltung kann das ab- und/oder adsorptionsfähige Material Aktivkohle aufweisen und/oder einen quellfähigen Kunststoff, insbesondere PE, PP oder PVC aufweisen. Ebenso lassen sich alternativ oder zusätzlich andere Materialien mit ähnlichen, vergleichbaren Eigenschaften einsetzen.

Gemäß der Erfindung wird ein Kraftstofffiltersystem zum Filtern eines ein erstes und zweites Medium umfassenden Medienstroms vorgeschlagen. Das Filtersystem umfasst eine in einem Filtersystemgehäuse angeordnete Abscheidevorrichtung für das erste Medium, sowie ein Reinigungsmodul zur ab- und/oder adsorbierenden Aufnahme eines Anteils des zweiten Mediums in dem abgeschiedenen ersten Medium. Das Reinigungsmodul umfasst ein Gehäuse mit einem Einlass und einem Auslass und ein in dem Gehäuse angeordnetes austauschbares Filterelement. Dabei ist eine Strömungsrichtung des Medienstroms durch das Filterelement im bestimmungsgemäß eingebauten Zustand entgegen der Schwerkraft gerichtet. Das Filterelement weist ein ab- und/oder adsorptionsfähiges Material zur Aufnahme wenigstens eines Anteils des zweiten Mediums in dem ersten Medium auf. Das Filtersystem ist zur Abscheidung des ersten Mediums, beispielsweise Wasser, aus dem Kraftstoff, insbesondere Dieselkraftstoff, vorgesehen. Da das abgeschiedene Wasser geringe Mengen an Kraftstoff enthalten kann, muss das abgeschiedene Wasser gereinigt werden, bevor es an die Umwelt abgeführt werden kann. Diese Reinigung kann mit Hilfe des beschriebenen Reinigungsmoduls effektiv und unter vorteilhaften Voraussetzungen wie kompakter Bauweise und günstiger Wartbarkeit erfolgen. Da das Reinigungsmodul nicht auf Lebensdauer des Filtersystems ausgelegt sein muss, da das Filterelement des Reinigungsmoduls gewechselt werden kann, ist es möglich, das Reinigungsmodul auf möglichst kleinem Bauraum zu realisieren. Dadurch ist ein solches Filtersystem sowohl aus bauraumtechnischen Gründen als auch aus Kostengesichtspunkten vorteilhaft darzustellen. Das Reinigungsmodul kann in einer Ausgestaltung neben dem Filtersystemgehäuse oder in einer anderen Ausgestaltung unterhalb des Filtersystemgehäuses angeordnet sein.

Erfindungsgemäß ist das Reinigungsmodul als Kartusche ausgebildet und mit seinem ersten Gehäuseteil und/oder seinem zweiten Gehäuseteil lösbar mit dem Filtersystemgehäuse verbunden. Das Reinigungsmodul kann so als Kartusche bei erfolgter Beladung mit dem zu ab- und/oder adsorbierenden zweiten Medium ausgetauscht werden. Dadurch ist eine schnelle und kostengünstige Wartung des Reinigungsmoduls zu realisieren. Wenn das Reinigungsmodul mit dem Filtersystemgehäuse lösbar verbunden ist, kann auch die Überführung des zu reinigenden ersten Mediums aus dem Filtersystemgehäuse in das Reinigungsmodul auf effektive Weise mediendicht erfolgen. Auch ist so ein möglichst kompakter Aufbau des Filtersystems mit Reinigungsmodul darzustellen. Die Dichtung zwischen dem Reinigungsmodul und dem Filtersystemgehäuse kann als relativ einfache Dichtung ausgeführt sein, da der Medienstrom unter geringem Druck von dem Filtersystem in das Reinigungsmodul strömt, wobei der Druck gerade nur ausreichen muss, damit das gereinigte erste Medium wieder am Auslass des Reinigungsmodul abfließt.

Gemäß einer vorteilhaften Ausgestaltung kann das Reinigungsmodul in dem Filtersystemgehäuse angeordnet sein. Diese alternative Anordnung des Reinigungsmoduls im Filtersystemgehäuse ermöglicht einen besonders kompakten Aufbau des gesamten Filtersystems mit integriertem Reinigungsmodul, was sowohl unter Bauraumanforderungen wie auch unter Kostengesichtspunkten günstige Lösungen der Aufbereitung des abgeschiedenen ersten Mediums ermöglicht.

Gemäß einer vorteilhaften Ausgestaltung kann das Filtersystem als Kraftstofffiltersystem ausgebildet sein und das Reinigungsmodul kann zur ab- und/oder adsorbierenden Aufnahme eines Kraftstoffanteils in abgeschiedenem Wasser vorgesehen sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine schematische Darstellung eines Filtersystems in Seitenansicht mit einem Reinigungsmodul nach einem Ausführungsbeispiel der Erfindung;
- Fig. 2: das Filtersystem mit Reinigungsmodul aus Fig. 1 in Draufsicht;
- Fig. 3: das Filtersystem mit Reinigungsmodul aus Fig. 1 mit entnommenem Filterelement des Reinigungsmoduls;
- Fig. 4: eine schematische Darstellung eines Filtersystems mit einem Reinigungsmodul nach einem weiteren Ausführungsbeispiel der Erfindung, bei dem das gesamte Reinigungsmodul abnehmbar ausgeführt ist;
- Fig. 5: eine schematische Darstellung eines Filtersystems in Seitenansicht mit einem Reinigungsmodul nach einem weiteren Ausführungsbeispiel der Erfindung, bei dem das Reinigungsmodul an der Unterseite des Filtersystemgehäuses angeordnet ist;
- Fig. 6: das abgenommene Reinigungsmodul nach Fig. 5;
- Fig. 7: das Filterelement des Reinigungsmoduls nach Fig. 6 im Längsschnitt; und
- Fig. 8: das Filterelement des Reinigungsmoduls nach Fig. 6 in Draufsicht.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

Die Erfindung ist anhand eines Reinigungsmoduls 10 zur Reinigung eines mit einem zweiten Medium verunreinigten Medienstroms eines ersten Mediums für ein Filtersystem 100 beschrieben, wobei das Filtersystem 100 beispielhaft ein bevorzugtes Kraftstofffiltersystem ist und das erste Medium Wasser und das zweite Medium Dieselkraftstoff, wobei das Wasser im Filtersystem 100 von dem Dieselkraftstoff abgetrennt wird. Denkbar sind jedoch auch andere Anwendungsgebiete des Filtersystems 100.

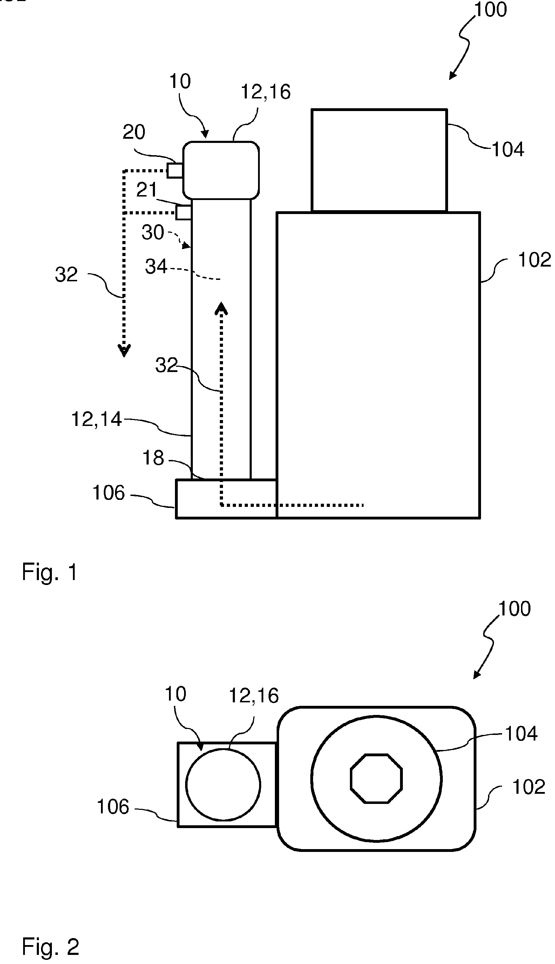

Figur 1 zeigt eine schematische Darstellung eines Filtersystems 100 in Seitenansicht mit einem Reinigungsmodul 10 nach einem Ausführungsbeispiel der Erfindung. Das Filtersystem 100 zum Filtern des das erste und das zweite Medium umfassenden Medienstroms, weist eine in dem Filtersystemgehäuse 102 angeordnete, nicht dargestellte, Abscheidevorrichtung für das erste Medium auf. Das Filtersystemgehäuse 102 weist einen, bevorzugt lösbaren, mediendichten Deckel 104 auf, um ein im Inneren des Filtersystemgehäuses 102, ebenfalls nicht dargestelltes Filterelement zu warten oder auszutauschen. Weiter weist das Filtersystem 100 das Reinigungsmodul 10 zur ab- und/oder adsorbierenden Aufnahme eines Anteils des zweiten Mediums in dem abgeschiedenen ersten Medium auf, welches über ein Verbindungsteil 106 mit dem Filtersystemgehäuse 102 verbunden ist. Das Reinigungsmodul 10 weist ein Gehäuse 12 mit einem Einlass 18 und einem Auslass 20 auf, wobei der Einlass 18 an dem ersten Gehäuseteil 14 und der Auslass 20 an dem zweiten Gehäuseteil 16 angeordnet ist. Das erste und das zweite Gehäuseteil 14, 16 sind zu einer, insbesondere lösbaren, mediendichten Verbindung miteinander ausgebildet. Die beiden Gehäuseteile 14, 16 können dazu beispielsweise verschraubt oder mit einem Schnellverschluss verbunden sein. Alternativ ist ein Auslass 21 dargestellt, der an dem ersten Gehäuseteil 14 angeordnet sein kann. Auch eine solche Lösung ist günstig, da dann das zweite Gehäuseteil 16, beispielsweise zur Entnahme des Filterelements 30, abgenommen werden kann, ohne eine Verbindung von dem Auslass 21 zu weiterführenden Komponenten zu lösen.

In dem Gehäuse 12 ist das austauschbare Filterelement 30 lösbar angeordnet. Das Filterelement 30 weist ein ab- und/oder adsorptionsfähiges Material 34 zur Aufnahme wenigstens eines Anteils des zweiten Mediums in dem ersten Medium auf. Das ab- und/oder adsorptionsfähige Material 34 kann bevorzugt Aktivkohle aufweisen. Alternativ ist auch denkbar, dass das ab- und/oder adsorptionsfähige Material 34 einen quellfähigen Kunststoff, insbesondere PE, PP oder PVC aufweist, der auch als eine Schüttung aus Kunststoffröhrchen ausgebildet sein kann, insbesondere als eine Schüttung aus Kunststoffröhrchen mit einem Vlies ausgebildet sein kann. Das ab- und/oder adsorptionsfähige Material 34 kann als lose, granulatartige Schüttung vorgesehen sein und/oder gesintert vorgesehen und/oder geschäumt vorgesehen sein.

Die Strömungsrichtung 32 des Medienstroms erfolgt von dem Filtersystemgehäuse 102 durch das Verbindungsteil 106 durch den Einlass 18 in das Gehäuse 12 des Reinigungsmoduls 10, wo der Medienstrom durch das Filterelement 30 im bestimmungsgemäß eingebauten Zustand entgegen der Schwerkraft gerichtet ist und das Reinigungsmodul 10 über den Auslass 20 oder in der alternativen Ausführungsform über den Auslass 21 oben verlässt.

Zusätzlich kann an dem Reinigungsmodul 10 ein Indikator zur Anzeige einer Beladung mit dem zweiten Medium angeordnet sein, um so eine bedarfsorientierte Wartung zu ermöglichen.

In Figur 2 ist das Filtersystem 100 mit Reinigungsmodul 10 aus Figur 1 in Draufsicht dargestellt. Das Filtersystemgehäuse 102 ist mit dem Deckel 104 von oben zu sehen. Das Reinigungsmodul 10 ist auf dem mit dem Filtersystemgehäuse 102 verbundenen Verbindungsteil 106 angeordnet. Von oben ist das zweite Gehäuseteil 16 auf dem Verbindungsteil 106 zu erkennen. Der Auslass 20 ist in der Darstellung weggelassen.

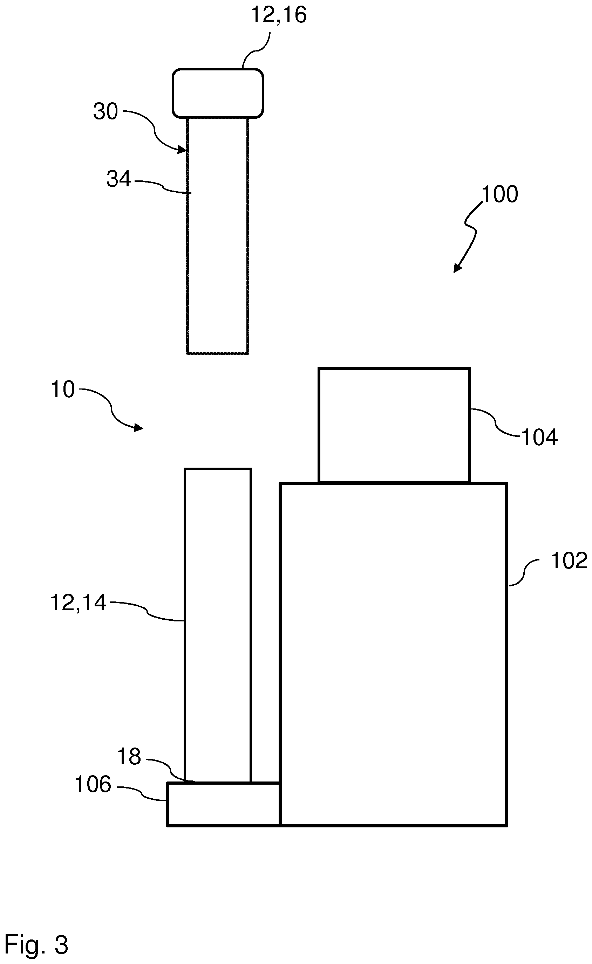

Figur 3 zeigt das Filtersystem 100 mit Reinigungsmodul 10 aus Figur 1 mit entnommenem Filterelement 30 des Reinigungsmoduls 10. Das Filterelement 30 mit dem ab- und/oder adsorptionsfähigen Material 34 ist in diesem Ausführungsbeispiel an dem zweiten Gehäuseteil 16 angeordnet. Das Filterelement 30 kann mit dem zweiten Gehäuseteil 16 dabei unlösbar verbunden sein und so als eine Einheit behandelt werden. Jedoch ist auch denkbar, dass das Filterelement 30 an dem zweiten Gehäuseteil 16 lösbar angeordnet ist und davon abgenommen und separat ausgetauscht werden kann. Damit kann das Filterelement 30 mit dem zweiten Gehäuseteil 16 in Form einer Kartusche nach oben aus dem ersten Gehäuseteil 14 entnommen werden, um beispielsweise ausgetauscht oder aufbereitet zu werden. Ein neues Filterelement 30 mit einem zweiten Gehäuseteil 16 kann wieder eingesetzt und mit dem ersten Gehäuseteil 14 mediendicht verbunden, beispielsweise verschraubt oder verklipst werden, um das Reinigungsmodul 10 wieder in einen betriebsbereiten Zustand zu versetzen. Der Vorteil einer solchen Ausführungsform besteht darin, dass bei Entnahme des Filterelements 30 mit dem zweiten Gehäuseteil 16 das restliche erste Medium in dem ersten Gehäuseteil 14 verbleibt und die Umgebung so nicht verschmutzt wird.

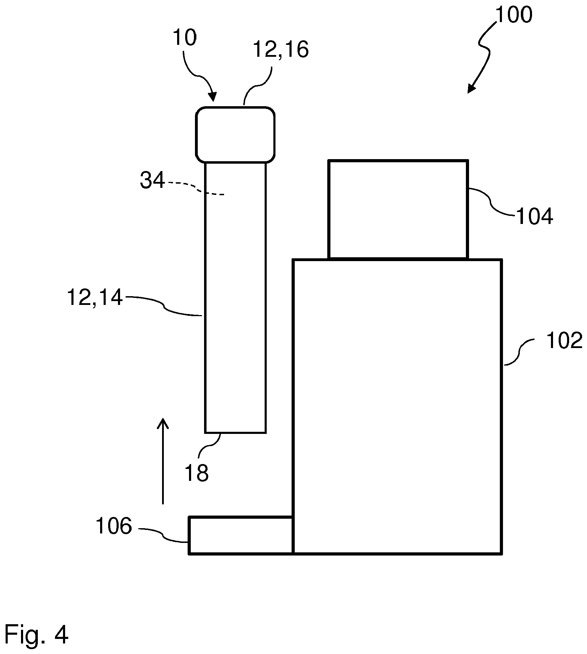

Figur 4 zeigt eine schematische Darstellung eines Filtersystems 100 mit einem Reinigungsmodul 10 nach einem weiteren Ausführungsbeispiel der Erfindung, bei dem das gesamte Reinigungsmodul 10 abnehmbar ausgeführt ist. Das Reinigungsmodul 10 ist in diesem Ausführungsbeispiel als Ganzes als Kartusche ausgebildet und mit seinem ersten Gehäuseteil 14 lösbar mit dem Filtersystemgehäuse 102 verbunden. So kann zu Wartungszwecken das gesamte Reinigungsmodul 10 nach oben von dem Verbindungsteil 106 abgenommen werden und ein neues oder aufbereitetes Reinigungsmodul 10 wieder auf das Verbindungsteil 106 aufgesetzt werden, um das Filtersystem 100 wieder in einen betriebsbereiten Zustand zu versetzen.

Alternativ ist auch denkbar, dass das Reinigungsmodul 10 direkt in dem Filtersystemgehäuse 102 angeordnet ist, so dass es zu Wartungszwecken aus dem Filtersystemgehäuse 102 entnommen und wieder eingesetzt werden kann.

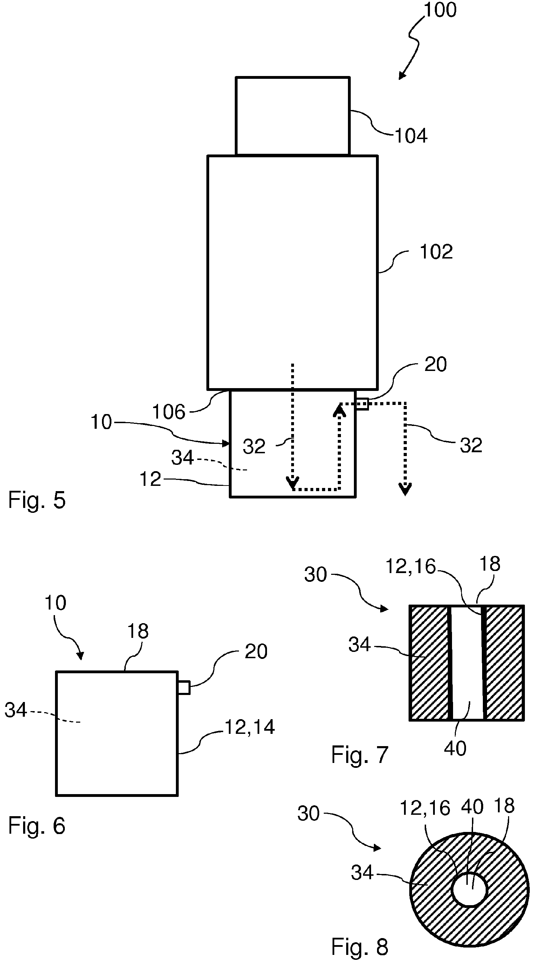

Figur 5 zeigt eine schematische Darstellung eines Filtersystems 100 in Seitenansicht mit einem Reinigungsmodul 10 nach einem weiteren Ausführungsbeispiel der Erfindung, bei dem das Reinigungsmodul 10 an der Unterseite des Filtersystemgehäuses 102 angeordnet ist. Das Reinigungsmodul 10 ist mediendicht mit der Unterseite des Filtersystemgehäuses 102 verbunden. Der Medienstrom wird von oben durch die Mitte des Reinigungsmoduls 10 eingeleitet. Das Filterelement 30 dieser Ausführungsform ist in Figur 7 dargestellt und ist als Hohlzylinder aus ab- und/oder adsorptionsfähigem Material 34 ausgeführt, so dass der Medienstrom in dem zentralen Hohlraum 40 des Filterelements 30 nach unten strömen kann und dann im Mantel des Hohlzylinders durch das ab- und/oder adsorptionsfähige Material 34 nach oben strömen kann. Dazu ist die Außenseite des Hohlraums 40 zweckmäßigerweise mediendicht ausgeführt, beispielsweise durch das als Hohlzylinder ausgeführte zweite Gehäuseteil 16, welches dann den Hohlraum 40 auskleidet, um den Medienstrom durch den Hohlraum 40 nach unten zu leiten, so dass der Medienstrom das ab- und/oder adsorptionsfähige Material 34 nur im Mantel des Hohlzylinders von unten nach oben durchströmt und nicht direkt aus dem Hohlraum 40 in das ab- und/oder adsorptionsfähige Material 34 durchtritt. Das gereinigte erste Medium wird dann nach Durchströmen des Filterelements 30 über den am oberen Rand des Reinigungsmoduls 10 angeordneten Auslass 20 nach außen abgeführt.

Figur 6 zeigt das abgenommene Reinigungsmodul 10 nach Figur 5. Der Einlass 18 ist an der Oberseite des Gehäuses 12 des Reinigungsmoduls 10 angeordnet. Das Gehäuse 12 selbst kann beispielsweise zylinderförmig ausgeführt sein.

In Figur 7 ist das Filterelement 30 des Reinigungsmoduls 10 nach Figur 6 im Längsschnitt dargestellt. Das Filterelement 30 weist einen hohlzylinderförmigen Körper aus ab-und/oder adsorptionsfähigem Material 34 auf mit einem zentralen Hohlraum 40. Der Hohlraum 40 stellt mit seiner oberen Öffnung den Einlass 18 des Reinigungsmoduls 10 dar. Das zweite Gehäuseteil 16 des Gehäuses des Reinigungsmoduls kann beispielsweise als Hohlzylinder ausgebildet sein, mittels dessen der Hohlraum 40 auf seiner Außenseite mediendicht abgedichtet werden kann, um so zu verhindern, dass der Medienstrom beim Eintritt in das Reinigungsmodul 10 durch den Hohlraum 40 direkt in das ab- und/oder adsorptionsfähige Material 34 des Filterelements 30 eintritt. Der Medienstrom kann so auf der Unterseite des zweiten Gehäuseteils 16 unten ausströmen und so in das ab-und/oder adsorptionsfähige Material 34 des Filterelements 30 von unten eintreten, um das das ab- und/oder adsorptionsfähige Material 34 des Filterelements 30 von unten nach oben zu durchströmen und so für eine effektive Reinigung des ersten Mediums durch Ab- bzw. Adsorption des Anteils des zweiten Mediums in dem Material 34 zu sorgen.

Figur 8 zeigt das Filterelement 30 des Reinigungsmoduls 10 nach Figur 6 in Draufsicht. Der Hohlraum 40 ist mit dem Einlass 18 als zentrale Öffnung des Filterelements 30 dargestellt.

## Patentansprüche

1. Kraftstofffiltersystem (100) zum Filtern eines Wasser und Kraftstoff umfassenden Medienstroms, mit einer in einem Filtersystemgehäuse (102) angeordneten Abscheidevorrichtung für Wasser, und einem Reinigungsmodul (10) zur ab-und/oder adsorbierenden Aufnahme eines Kraftstoffanteils in dem abgeschiedenen Wasser, wobei das Reinigungsmodul (10) ein Gehäuse (12) mit einem Einlass (18) und einem Auslass (20, 21) und ein in dem Gehäuse (12) angeordnetes austauschbares Filterelement (30) umfasst, wobei das Filterelement (30) ein ab- und/oder adsorptionsfähiges Material (34) zur Aufnahme wenigstens eines Anteils des Kraftstoffs in dem abgeschiedenen Wasser aufweist, **dadurch gekennzeichnet, dass** das Reinigungsmodul (10) neben dem Filtersystemgehäuse (102) angeordnet ist, dass das Gehäuse (12) ein unteres erstes Gehäuseteil (14) und ein oberes zweites Gehäuseteil (16) umfasst, wobei der Einlass (18) am ersten Gehäuseteil (14) angeordnet ist, wobei das erste und das zweite Gehäuseteil (14, 16) zu einer lösbaren mediendichten Verbindung miteinander ausgebildet sind und wobei das Filterelement (30) an dem zweiten Gehäuseteil (16) angeordnet ist und mit diesem eine Kartusche bildet, und dass eine Strömungsrichtung (32) des Medienstroms durch das Filterelement (30) im bestimmungsgemäß eingebauten Zustand entgegen der Schwerkraft gerichtet ist.

2. Kraftstofffiltersystem nach Anspruch 1, wobei das Filterelement (30) an dem zweiten Gehäuseteil (16) lösbar angeordnet ist.

3. Kraftstofffiltersystem nach Anspruch 1 oder 2, wobei das Reinigungsmodul (10) mit seinem ersten Gehäuseteil (14) und/oder seinem zweiten Gehäuseteil (16) lösbar mit dem Filtersystemgehäuse (102) verbunden ist.

4. Kraftstofffiltersystem nach einem der vorhergehenden Ansprüche, wobei das ab-und/oder adsorptionsfähige Material (34) als lose, granulatartige Schüttung vorgesehen ist.

5. Kraftstofffiltersystem nach einem der vorhergehenden Ansprüche, wobei das ab-und/oder adsorptionsfähige Material (34) gesintert und/oder geschäumt vorgesehen ist.

6. Kraftstofffiltersystem nach einem der vorhergehenden Ansprüche, wobei das ab-und/oder adsorptionsfähige Material (34) Aktivkohle aufweist.

7. Kraftstofffiltersystem nach einem der vorhergehenden Ansprüche, wobei das ab-und/oder adsorptionsfähige Material (34) einen quellfähigen Kunststoff, insbesondere PE, PP oder PVC aufweist.

8. Kraftstofffiltersystem nach Anspruch 7, wobei das ab- und/oder adsorptionsfähige Material (34) eine Schüttung aus Kunststoffröhrchen aufweist, insbesondere eine Schüttung aus Kunststoffröhrchen mit einem Vlies aufweist.

9. Kraftstofffiltersystem nach einem der vorgehergehenden Ansprüche, wobei ein Indikator zur Anzeige einer Beladung des Filterelements (30) mit dem zweiten Medium vorgesehen ist.

## Claims

1. A fuel filter system (100) for filtering a media flow comprising water and fuel, having a separating device for water disposed in a filter system housing (102), and a cleaning module (10) for absorptively and/or adsorptively receiving a fuel portion in the separated water, wherein the cleaning module (10) comprises a housing (12) having an inlet (18) and an outlet (20, 21) and a replaceable filter element (30) disposed in the housing (12), wherein the filter element (30) features a material (34) capable of absorption and/or adsorption for accommodating at least some of the fuel in the separated water, **characterized in that** the cleaning module (10) is disposed beside the filter system housing (102), **in that** the housing (12) comprises a lower first housing component (14) and an upper second housing component (16), wherein the inlet (18) is disposed on the first housing component (14), wherein the first and the second housing components (14, 16) are designed for being detachably interconnected in a media-tight manner, and wherein the filter element (30) is disposed on the second housing component (16) and forms a cartridge with it, and **in that** a flow direction (32) of the media flow through the filter element (30) in the installed state as intended is directed against the force of gravity.

2. The fuel filter system according to claim 1, wherein the filter element (30) is disposed detachably on the second housing component (16).

3. The fuel filter system according to claim 1 or 2, wherein the cleaning module (10) is detachably connected to the filter system housing (102) with its first housing component (14) and/or its second housing component (16).

4. The fuel filter system according to one of the preceding claims, wherein the material (34) capable of absorption and/or adsorption is provided as a loose, granular bed.

5. The fuel filter system according to one of the preceding claims, wherein the material (34) capable of absorption and/or adsorption is provided in sintered and/or foamed form.

6. The fuel filter system according to one of the preceding claims, wherein the material (34) capable of absorption and/or adsorption features activated carbon.

7. The fuel filter system according to one of the preceding claims, wherein the material (34) capable of absorption and/or adsorption features a plastic material capable of swelling, in particular PE, PP or PVC.

8. The fuel filter system according to claim 7, wherein the material (34) capable of absorption and/or adsorption features a bed comprising plastic tubes, in particular features a bed comprising plastic tubes having a non-woven fabric.

9. The fuel filter system according to one of the preceding claims, wherein an indicator for indicating a loading of the filter element (30) with the second medium is provided.

## Revendications

1. Système de filtre à carburant (100) destiné au filtrage d'un flux de milieux comprenant de l'eau et du carburant, ayant un dispositif de séparation pour de l'eau disposé dans un boîtier de système de filtre (102), et ayant un module de nettoyage (10) destiné à la réception absorbante et/ou absorbante d'une part du carburant dans l'eau séparée, le module de nettoyage (10) comprenant un boîtier (12) ayant une entrée (18) et une sortie (20, 21) et un élément filtrant (30) échangeable placé dans le boîtier (12), l'élément filtrant (30) présentant un matériau (34) apte à absorber et/ou à adsorber permettant de réceptionner au moins une part du carburant dans l'eau séparée, **caractérisé en ce que** le module de nettoyage (10) est disposé à côté du boîtier de système de filtre (102), **en ce que** le boîtier (12) comprend une première partie de boîtier (14) inférieure et une deuxième partie de boîtier (16) supérieure, l'entrée (18) étant disposée sur la première partie de boîtier (14), la première et la deuxième parties de boîtier (14, 16) formant ensemble une liaison amovible étanche aux milieux, et l'élément filtrant (30) étant disposé sur la deuxième partie de boîtier (16) et formant avec cette partie une cartouche, et **en ce qu'**une direction d'écoulement (32) du flux de milieux passe à travers l'élément filtrant (30), dans une position de montage conformément à l'utilisation prévue, dans une direction opposée à la force de gravité.

2. Système de filtre à carburant selon la revendication 1, l'élément filtrant (30) étant disposé de manière amovible sur la deuxième partie de boîtier (16).

3. Système de filtre à carburant selon la revendication 1 ou 2, le module de nettoyage (10) étant relié, par sa première partie de boîtier (14) et/ou sa deuxième partie de boîtier (16), de manière amovible au boîtier de système de filtre (102).

4. Système de filtre à carburant selon l'une quelconque des revendications précédentes, le matériau (34) apte à absorber et/ou à adsorber étant prévu sous forme de matériau granuleux en vrac.

5. Système de filtre à carburant selon l'une quelconque des revendications précédentes, le matériau (34) apte à absorber et/ou à adsorber étant prévu sous forme frittée et/ou moulée par expansion.

6. Système de filtre à carburant selon l'une quelconque des revendications précédentes, le matériau (34) apte à absorber et/ou à adsorber comprenant du charbon actif.

7. Système de filtre à carburant selon l'une quelconque des revendications précédentes, le matériau (34) apte à absorber et/ou à adsorber présentant une matière plastique ayant la capacité à gonfler, notamment du PE, du PP ou du PVC.

8. Système de filtre à carburant selon la revendication 7, le matériau (34) apte à absorber et/ou à adsorber comprenant de petits tubes en matière plastique en vrac, notamment de petits tubes en matière plastique en vrac pourvus d'un non-tissé.

9. Système de filtre à carburant selon l'une quelconque des revendications précédentes, un indicateur affichant une charge de l'élément filtrant (30) avec le deuxième milieu étant prévu.
